# EUROPÄISCHE PATENTSCHRIFT

(11) **EP 2 798 927 B1**
(45) Veröffentlichungstag und Bekanntmachung des Hinweises auf die Patenterteilung: **22.06.2016**
(21) Anmeldenummer: 14401046.9
(22) Anmeldetag: 16.04.2014
(51) Int. Cl.: A01B 15/10

(54) **Streichblech**
Mouldboard
Versoir de charrue

(30) Priorität: 30.04.2013 DE 102013104372
(43) Veröffentlichungstag der Anmeldung: 05.11.2014
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(56) Entgegenhaltungen:
- CZ-B6- 296 830
- US-A- 3 995 698

## Beschreibung

Die Erfindung bezieht sich auf ein Streichblech für Pflüge in Vollkörper- oder Streifenkörperausbildung mit einem eine Streichblechoberkante, eine Streichblechunterkante sowie eine Streichblechvorderkante aufweisenden Streichblechhinterteil mit einer in die Streichblechunterkante und in die Streichblechvorderkante übergehenden Ausnehmung, in die ein im Wesentlichen kongruent ausgebildetes Streichblechvorderteil als Austauschteil einsetzbar ist, das im montierten Zustand die Streichblechvorderkante und die Streichblechunterkante des Streichblechhinterteils fortsetzt.

Ein Streichblech der vorgenannten Art ist aus dem LEGERER-Katalog 2010 "Ersatzteile für Bodenbearbeitungsgeräte" der Legerer GmbH, A-2294 Marchegg bekannt. Dabei ist ein mit einer Streichschiene und einem Düngerleitblech zu versehendes Streichblech mit einer im Wesentlichen leicht konvex ausgebildeten Ausnehmung versehen, in die ein entsprechend kongruent im Wesentlichen konkav ausgebildetes Streichblechvorderteil einzusetzen ist. Das Streichblechhinterteil und das Streichblechvorderteil bilden gemeinsam eine Streichblechunterkante und eine Streichblechoberkante, wobei das Streichblechvorderteil räumlich relativ nahe gelegen zur Streichblechoberkante in die Streichblechvorderkante des Streichbleches übergeht. Das Streichblechvorderteil ist als Verschleißteil auszutauschen, ohne das gesamte Streichblech ersetzen zu müssen. Bei höheren Pfluggeschwindigkeiten sind jedoch die Streichblechbeanspruchungen wesentlich erhöht, d.h. es entsteht ein erhöhter Verschleiß. Solchen erhöhten Verschleißerscheinungen kann das bekannte Streichblech mit seinem Streichblechvorderteil nicht mehr im befriedigendem Maße gerecht werden.

Es ist daher Aufgabe der vorliegenden Erfindung, mit einem möglichst geringen zusätzlichen Material- und Bauaufwand ein Streichblech der eingangs genannten Art auch bei höheren Pfluggeschwindigkeiten verschleißunanfälliger auszubilden.

Zur Lösung dieser Aufgabe zeichnet sich das Streichblech der eingangs genannten Art dadurch aus, dass die Länge des maximalen orthogonalen Abstandes zwischen dem der Streichblechvorderkante abgewandten Scheitel des in die Ausnehmung eingesetzten Streichblechvorderteils zu der Verbindungslinie zwischen dem Übergang der Ausnehmung in die Streichblechunterkante und dem Übergang der Ausnehmung in die Streichblechvorderkante 40% bis 100% der Länge der Verbindungslinie beträgt, dass der Winkel zwischen einer in der vorderen Hälfte des oberen und schräg nach vorn - unten geradlinig verlaufenden Bereiches des Scharblechvorderteiles im Bereich der Trennlinie zwischen Ausnehmung im Streichblechinterteil und Streichblechvorderteil angelegten Geraden und einer in der unteren Hälfte des hinteren und schräg nach vorn - unten geradlinig verlaufenden Bereiches des Scharblechvorderteiles im Bereich der Trennlinie zwischen Ausnehmung im Streichblechinterteil und Streichblechvorderteil angelegten kleiner als 90°, jedoch größer als 60° ist.

Damit ist ein Streichblech für Pflüge in Vollkörper- oder Streifenkörperausbildung zur Verfügung gestellt mit einem wesentlich verbesserten Verschleißbereich, so dass auch erhöhten Beanspruchungen bei höheren Pfluggeschwindigkeiten standgehalten werden kann. Das Streichblech hat insgesamt einen gegenüber dem vorbekannten Stand der Technik wesentlich vergrößerten Verschleißbereich, der hinsichtlich seiner geometrischen Erstreckung in dem Streichblechvorderteil als Austauschteil berücksichtigt ist. Das austauschbare Streichblechvorderteil ist mit seinem gewölbten Bereich mit seinem Scheitel wesentlich gegenüber dem vorbekannten Stand der Technik in den hinteren Bereich des Streichbleches in ausgedehnter Weise hineingewachsen, so dass die am stärksten während der Bodenbearbeitung in Anspruch genommenen Bereiche durch das Streichblechvorderteil gebildet sind. Die in bevorzugter Weise im wesentlichen konvexe Ausnehmung bzw. das entsprechend in bevorzugter Weise im Wesentlichen konkav kongruent ausgebildete Streichblechvorderteil ist dabei bevorzugtermaßen im wesentlichen halbellipsenförmig bereichsweise ausgebildet. Dabei ist es bevorzugt so vorgesehen, dass die Trennlinie zwischen der im Wesentlichen konvex ausgebildeten Ausnehmung im Streichblechhinterteil und dem im Wesentlichen kongruent konkav ausgebildeten Streichblechvorderteil vom Übergang der Trennlinie in die Streichblechunterkante in Bewegungsrichtung des über das Streichblech fließenden Bodenmaterials schräg nach hinten in eine der Streichblechvorderkante abgewandte Richtung und zur Streichblechoberkante hin ausgerichtet verläuft, dann in einen bogenförmigen, den Scheitelverlauf einer Ellipse nachempfundenen Verlauf übergeht und dann schräg zur Streichblechvorderkante und zur Streichblechunterkante ausgerichtet auf die Streichblechvorderkante zuläuft und in diese übergeht. Durch die im vorderen Bereich aufgespreizte Ausgestaltung des Streichblechvorderteils, wie durch die Winkelangaben der zueinander angeordneten Oberkante und Hinterkante des Streichblechvorderteils angegeben ist, wird eine optimierte Ausgestaltung des als Einsatz- und Austauschteil ausgebildete Streichblechvorderteils hinsichtlich auftretenden Verschleißes erreicht.

Bei einem so gearteten Verlauf ist es zu realisieren, dass das Streichblechhinterteil das Streichblechvorderteil bereichsweise zangenartig umgreift, womit das Streich-blechvorderteil durch das Streichblechhinterteil örtlich ausgesteift wird.

Eine besonders gute Ausgestaltung sowohl hinsichtlich des auftretenden Verschleißes wie der ausreichenden Steifigkeit der Teile des Streichbleches wird dadurch gewährleistet, dass Winkel in einem Bereich zwischen 75° und 65° liegt.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: ein Ausführungsbeispiel eines Streichbleches in Vollkörperaus-bildung in einer Ansicht auf die Streichblechvorderkante, die Scharspitze und das Scharblatt;
- Fig. 2: eine Seitenansicht auf das Ausführungsbeispiel des Streichbleches nach Fig. 1 mit der Anlageschiene und
- Fig. 3: eine Draufsicht auf das Ausführungsbeispiel nach Fig. 2.

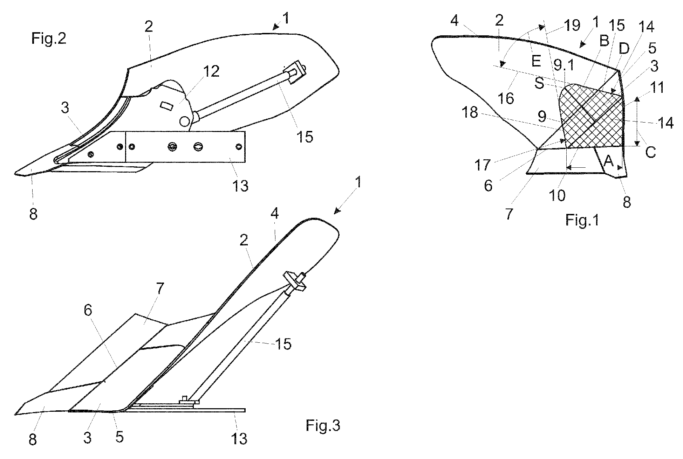

Allgemein mit 1 ist das Streichblech für Pflüge beziffert, das in den Ausführungsbeispielen nach den Fig. 1 bis 3 als Vollkörperblech ausgebildet ist mit einem Streichblechhinterteil 2 und einem Streichblechvorderteil 3. An dem Streichblech 1 ist eine Streichblechoberkante 4, eine Streichblechvorderkante 5 und eine Streichblechunterkante 6 ausgebildet. An die Streichblechunterkante 6 schließt sich ein Scharblatt 7 sowie eine Scharspitze 8 an.

Das Streichblechhinterteil 2 hat eine im Wesentlichen konvexe und als Aussparung ausgebildete Ausnehmung 9 mit einer Trennlinie 9.1, die bei 10 in die Streichblechunterkante 6 und bei 11 in die Streichblechvorderkante 5 übergeht. Das Streichblechvorderteil 3 ist im Wesentlichen kongruent zur Ausnehmung 9 konkav ausgebildet, so dass die Trennlinie 9.1 im montierten Zustand des Streichblechhinterteils zwischen dem Streichblechhinterteil 2 und dem Streichblechvorderteil 3 verläuft. Das Streichblechvorderteil 3 ist in die Ausnehmung 9 eingesetzt und als Verschleißteil austauschbar gehaltert, beispielsweise über den Rumpf bzw. den Grundkörper 12, der zusammen mit der Anlageschiene 13 der Fig. 2 zu entnehmen ist. Zwischen dem Übergang 10 der Trennlinie 9.1 in die Streichblechunterkante 6 und dem Übergang 11 der Trennlinie 9.1 in die Streichblechvorderkante 5 verläuft eine gerade Verbindungslinie 14.

Der orthogonale Abstand B zwischen dem Scheitel S der Trennlinie 9.1 der Ausnehmung 9 zwischen dem Streichblechvorderteil 2 und dem Streichblechvorderteil 3 ist im Hinblick auf die Darstellung der Verschleißzonen des Streichblechs 1 auf die Länge der Verbindungslinie 14 abgestimmt und soll mindestens 40% der Länge der Verbindungslinie 14 zwischen den Übergangspunkten 10 und 11 betragen und maximal 100% der Länge. Damit ist das Streichblechvorderteil 3 wesentlich in das Streichblechhinterteil 2 hineinverlaufend ausgebildet und berücksichtigt auch bei höheren Pfluggeschwindigkeiten die stark beanspruchten Zonen des Streichbleches 1 insgesamt.

Die Trennlinie 9.1 hat eine der Form einer Halbellipse angenäherten Verlauf, insbesondere in dem der Scheitel S benachbarten tiefer in dem Streichblechhinterteil 2 gelegenen Zone des Streichblechvorderteils 3. Die Trennlinie 9.1 hat dabei einen Verlauf, der von dem Punkt 10 des Übergangs der Trennlinie 9.1 in die Streichblechunterkante 6 ausgehend schräg nach hinten in eine der Streichblechvorderkante 5 abgewandte Richtung und schräg nach oben zur Streichblechoberkante ausgerichtet verläuft, dann in den in etwa halbelliptischen Bogenbereich unter Einschluss des Scheitels S übergeht und dann wiederum schräg zur Streichblechvorderkante 5 und zur Streichblechunterkante 6 hin ausgerichtet weiter verläuft und danach bei dem Punkt 11 in die Streichblechvorderkante 5 übergeht. Damit ist sichergestellt, dass das Streichblechhinterteil 2 das Streichblechvorderteil 3 bereichsweise nach Art einer Zange umgreift.

Um ein hinreichendes Maß des Umgreifens durch das Streichblechhinterteil vorliegen zu haben, entspricht der Abstand A des Punktes 10 des Überganges der Ausnehmung 9 bzw. der Trennlinie 9.1 in die Streichblechunterkante 6 zu der Streichblechvorderkante 5 maximal 85% der Gesamtlänge der Streichblechunterkante 6. Der Abstand C des Punktes 11 des Überganges der Ausnehmung 9 bzw. der Trennlinie 9.1 in die Streichblechvorderkante 5 zu der Streichblechhinterkante 6 entspricht maximal 85% der Gesamtlänge der Streichblechvorderkante 5. Auch der obere Abstand des Punktes des Überganges der Streichblechoberkante 4 in die Streichblechvorderkante 5 ist entsprechend abgestimmt. Daher soll die Länge der Verbindungslinie 14 zwischen den Punkten 10 und 11 ein Maß haben, das zwischen 60 und 75% der Länge der Streichblechunterkante 6 liegt.

Weiterhin überragt das Streichblechvorderteil 3 mit seinem Scheitelpunkt S die gerade Verbindungslinie D zwischen dem Schnittpunkt des hinteren Endes des Scharblattes 7 mit der Streichblechunterkante 6 des Scharblechhinterteiles 2 und dem Schnittpunkt der Streichblechvorderkante 5 mit der Streichblechoberkante 4 zumindest im mittleren Bereich der Verbindungslinie. Der Begriff des Schnittpunktes ist dabei nicht idealisiert zu verstehen, sondern bezieht sich auch auf gerundete Eckbereiche, so dass hierunter ein gedachter Schnittpunkt zu verstehen ist.

Unter dem mittleren Bereich der Verbindungslinie wird zumindest das mittlere Drittel der Länge der Verbindungslinie verstanden. Dieser mittlere Bereich kann bis zu 70% der Länge der Verbindungslinie betragen. Der Abstand des Scheitelpunktes S zur Verbindungslinie beträgt zumindest 5%, vorzugsweise mehr als 10% der Länge der geraden Verbindungslinie zwischen dem Scheitelpunkt S und dem Schnittpunkt zwischen der Unterkante des Scharblechvorderteils 3 und der Vorderkante des Scharblechvorderteils 3.

In der vorderen Hälfte 14 des oberen und schräg nach vorn - unten verlaufenden Bereiches 15 des Scharblechvorderteiles 3 im Bereich der Trennlinie 9.1 zwischen Ausnehmung 9 im Streichblechinterteil 2 und Streichblechvorderteil 3 ist die Gerade 16 angelegt. Weiterhin ist in der unteren Hälfte 17 des hinteren und schräg nach vorn - unten verlaufenden Bereiches 18 des Scharblechvorderteiles 3 im Bereich der Trennlinie 9.1 zwischen Ausnehmung 9 im Streichblechinterteil 2 und Streichblechvorderteil 3 die Gerade und/oder Tangente 19 angelegt. Somit verlaufen diese beiden Bereiche 15 und 18 in einem bestimmten Winkel E zueinander.

Dieser Winkel E zwischen der in der vorderen Hälfte 14 des oberen und schräg nach vorn - unten verlaufenden Bereiches 15 des Scharblechvorderteiles 3 im Bereich der Trennlinie 9.1 zwischen Ausnehmung 9 im Streichblechinterteil 2 und Streichblechvorderteil 3 angelegten Geraden 16 und einer in der unteren Hälfte 17 des hinteren und schräg nach vorn - unten verlaufenden Bereiches 18 des Scharblechvorderteiles 3 im Bereich der Trennlinie 9.1 zwischen Ausnehmung 9 im Streichblechinterteil 2 und Streichblechvorderteil 3 angelegten Geraden 19 und/oder Tangenten ist kleiner als 90°, jedoch größer als 60°. In bevorzugter Weise liegt Winkel E in einem Bereich zwischen 75° und 65°.

In seinem vorderen Bereich ist es Streichblechvorderteil 3 aufgespreizt ausgestaltet, wie durch die vorstehenden Winkelangaben E der zueinander angeordneten Oberkante 15 und Hinterkante 18 des Streichblechvorderteils 3 angegeben ist. Hierdurch wird eine optimierte Ausgestaltung des als Einsatz- und Austauschteil ausgebildete Streichblechvorderteils 3 hinsichtlich des auftretenden Verschleißes erreicht.

In den Fig. 2 und 3 ist das Ausführungsbeispiel nach Fig. 1 noch weiter veranschaulicht. Hier ist der Rumpf 12 dargestellt, der über eine Halterung mit einem Traggestell des Pflugkörpers verbunden ist. Die Anlageschiene 13 ist an der Furchenwand des zu bearbeitenden Erdbodens anzulegen. Des Weiteren ist das Streichblechhinterteil 2 und das Streichblechvorderteil 3 ersichtlich, ebenso die Scharspitze 8.

## Patentansprüche

1. Streichblech (1) für Pflüge in Vollkörper- oder Streifenkörperausbildung mit einem eine Streichblechoberkante (4), eine Streichblechunterkante (6) sowie eine Streichblechvorderkante (5) aufweisenden Streichblechhinterteil (2) mit einer in die Streichblechunterkante (6) und in die Streichblechvorderkante (5) übergehenden Ausnehmung (9), in die ein im Wesentlichen kongruent ausgebildetes Streichblechvorderteil (3) als Austauschteil einsetzbar ist, das im montierten Zustand die Streichblechvorderkante (5) und die Streichblechunterkante (6) des Streichblechhinterteils (2) fortsetzt, **dadurch gekennzeichnet, dass** die Länge des maximalen orthogonalen Abstandes (B) zwischen dem der Streichblechvorderkante (5) abgewandten Scheitel (S) des in die Ausnehmung (9) eingesetzten Streichblechvorderteils (3) zu der Verbindungslinie (14) zwischen dem Übergang (10) der Ausnehmung (9) in die Streichblechunterkante (6) und dem Übergang (11) der Ausnehmung (9) in die Streichblechvorderkante (5) 40% bis 100% der Länge der Verbindungslinie (14) beträgt, dass der Winkel (E) zwischen einer in der vorderen Hälfte (14) des oberen und schräg nach vorn - unten geradlinig verlaufenden Bereiches (15) des Scharblechvorderteiles (3) im Bereich der Trennlinie (9.1) zwischen Ausnehmung (9) im Streichblechinterteil (2) und Streichblechvorderteil (3) angelegten Geraden (16) und einer in der unteren Hälfte (17) des hinteren und schräg nach vorn - unten geradlinig verlaufenden Bereiches (18) des Scharblechvorderteiles (3) im Bereich der Trennlinie (9.1) zwischen Ausnehmung (9) im Streichblechinterteil (2) und Streichblechvorderteil (3) angelegten Geraden (19) kleiner als 90°, jedoch größer als 60° ist.

2. Streichblech nach Anspruch 1, **dadurch gekennzeichnet, dass** Winkel (E) in einem Bereich zwischen 75° und 65° liegt.

## Claims

1. Mouldboard (1) for ploughs, configured as a solid body or as a slatted body, with a mouldboard upper edge (4), a mouldboard lower edge (6) and a mouldboard rear part (2) which has a mouldboard front edge (5) and a recess (9) which merges into the mouldboard lower edge (6) and into the mouldboard front edge (5) and into which a mouldboard front part (3), which is of substantially congruent design, is insertable as a replacement part which, in the mounted state, continues the mouldboard front edge (5) and the mouldboard lower edge (6) of the mouldboard rear part (2), **characterized in that** the length of the maximum orthogonal distance (B) between the apex (S), which faces away from the mouldboard front edge (5), of the mouldboard front part (3), which is inserted into the recess (9), to the connecting line (14) between the transition (10) of the recess (9) into the mouldboard lower edge (6) and the transition (11) of the recess (9) into the mouldboard front edge (5) is 40% to 100% of the length of the connecting line (14), **in that** the angle (E) between a straight line (16) placed in the front half (14) of the upper region (15), which runs obliquely forwards and rectilinearly downwards, of the blade plate front part (3) in the region of the separating line (9.1) between recess (9) in the mouldboard rear part (2) and mouldboard front part (3), and a straight line (19) placed in the lower half (17) of the rear region (18), which runs obliquely forwards and rectilinearly downwards of the blade plate front part (3) in the region of the separating line (9.1) between recess (9) in the mouldboard rear part (2) and mouldboard front part (3), is smaller than 90°, but greater than 60°.

2. Mouldboard according to Claim 1, **characterized in that** the angle (E) lies within a range of between 75° and 65°.

## Revendications

1. Versoir de charrue (1) pour charrues à corps massif ou à claire voie, comprenant une partie arrière de versoir (2) présentant une arête supérieure de versoir (4), une arête inférieure de versoir (6) ainsi qu'une arête avant de versoir (5) avec un évidement (9) se prolongeant dans l'arête inférieure de versoir (6) et dans l'arête avant de versoir (5), dans lequel évidement peut être insérée une partie avant de versoir (3) réalisée de manière essentiellement correspondante en tant que pièce de remplacement, qui, dans l'état monté, prolonge l'arête avant de versoir (5) et l'arête inférieure de versoir (6) de la partie arrière de versoir (2), **caractérisé en ce que** la longueur de la distance perpendiculaire maximale (B) entre le sommet (S) opposé à l'arête avant de versoir (5) de la partie avant de versoir (3) insérée dans l'évidement (9) et la ligne de liaison (14) entre la transition (10) de l'évidement (9) à l'arête inférieure de versoir (6) et la transition (11) de l'évidement (9) à l'arête avant de versoir (5) vaut 40 % à 100 % de la longueur de la ligne de liaison (14), **en ce que** l'angle (E) entre une droite (16) tracée dans la moitié avant (14) de la région supérieure (15) de la partie avant de plaque à lames (3) s'étendant obliquement vers l'avant et vers le bas en ligne droite, dans la région de la ligne de séparation (9.1) entre l'évidement (9) dans la partie arrière de versoir (2) et la partie avant de versoir (3), et une droite (19) tracée dans la moitié inférieure (17) de la région arrière (18) de la partie avant de plaque à lames (3) s'étendant obliquement vers l'avant et vers le bas en ligne droite dans la région de la ligne de séparation (9.1) entre l'évidement (9) dans la partie arrière de versoir (2) et la partie avant de versoir (3) est inférieur à 90°, mais supérieur à 60°.

2. Versoir selon la revendication 1, **caractérisé en ce que** l'angle (E) est compris dans une plage de 75° à 65°.
